# EUROPÄISCHE PATENTSCHRIFT

(11) **EP 2 841 248 B1**
(45) Veröffentlichungstag und Bekanntmachung des Hinweises auf die Patenterteilung: **01.11.2017**
(21) Anmeldenummer: 12740047.1
(22) Anmeldetag: 13.07.2012
(51) Int. Cl.: B29L 31/42, B29C 45/26

(54) **BORSTENTRÄGER-SPRITZGIESSWERKZEUG ZUM HERSTELLEN VON BÜRSTEN**
BRISTLE CARRIER INJECTION MOULDING TOOL FOR PRODUCING BRUSHES
OUTIL DE MOULAGE PAR INJECTION D'UN SUPPORT DE BROSSE

(30) Priorität: 27.04.2012 DE 102012008536; 25.05.2012 DE 102012010415
(43) Veröffentlichungstag der Anmeldung: 04.03.2015
(73) Patentinhaber: GB Boucherie NV, 8870 Izegem (BE)
(72) Erfinder: BOUCHERIE, Bart Gerard, B-8870 Izegem (BE)
(74) Vertreter: Prinz & Partner mbB
(86) Internationale Anmeldenummer: PCT/EP2012/002968
(87) Internationale Veröffentlichungsnummer: WO 2013/159799

(56) Entgegenhaltungen:
- EP-A1- 1 312 281
- DE-A1- 4 311 186
- JP-A- 9 182 632
- JP-A- 2003 061 751
- US-A1- 2002 166 188

## Beschreibung

Die Erfindung betrifft eine Borstenträger-Spritzgießvorrichtung zum Herstellen von Bürsten, insbesondere Zahnbürsten.

Es sind verschiedene Verfahren zur Herstellung von Bürsten bekannt. Üblicherweise wird ein Borstenträger mit einem Lochmuster versehen, das der gewünschten Anordnung von Borsten entspricht. Büschel von Borsten werden dann in die Löcher des Borstenträgers eingesetzt und darin mittels eingepresster, kleiner metallischer Anker oder mittels Schlaufen befestigt.

In einem alternativen Verfahren, das als AFT-Verfahren (anchor free tufting, das heißt ankerfreies Beborsten) bezeichnet wird, werden die Borstenbüschel am Borstenträger ohne die Verwendung von Schlaufen oder Ankern befestigt. Dabei können die Borstenträger als Bürstenkörper ausgestattet sein, bei denen Stiel, Hals und der wesentliche Teil des Bürstenkopfes als ein Teil ausgeführt sind. Der Bürstenkopf hat dann bereits das Lochmuster. Eine weitere Möglichkeit des AFT-Verfahrens besteht darin, kleine Bürstenkopfplatten mit Lochmuster vorzusehen, die dann zuerst bestopft werden. Die komplettierte Bürstenkopfplatte wird dann entweder in den eine Aufnahme aufweisenden Bürstenkörper eingesetzt und daran befestigt, oder die Bürstenkopfplatte wird umspritzt und beim Umspritzen entweder am Bürstenkörper befestigt, oder der Bürstenkörper wird beim Umspritzen erst hergestellt.

Die vorliegende Erfindung betrifft eine Borstenträger-Spritzgießvorrichtung und eine Vorrichtung zum Herstellen von Bürsten.

Moderne Zahnbürsten haben nicht mehr ausschließlich parallel verlaufende und im Querschnitt gleich dicke Borstenbüschel, sondern verschieden große und teilweise auch schräg verlaufende Büschel.

Eine gattungsgemäße Vorrichtung zeigt die DE 43 11 186 A1, bei der eine der beiden Formhälften axial kurze Einführschrägen angeformt haben, die dann auf ihre zugeordneten, zylindrischen Vorsprünge an der anderen Formhälfte treffen.

Die JP 2003 061751 A1 beschreibt zum Vermeiden von Hinterschnitten einen Einsatz in einer Formhälfte, der direkt an der Fläche der zweiten Formhälfte anliegt, so dass die zweite Formhälfte keinen zugeordneten Vorsprung hat. Der Einsatz ist an der ersten Fläche Oval und am freien Ende kreisrund, wobei die schmale Breite des Oval dem Durchmesser des Kreisdurchmessers entspricht.

Ferner zeigen die JP 9 182 632 A und die EP 1 312 281 A1 Zahnbürstenkörper, die Löcher haben, welche an der Rückseite einen vergrößerten Querschnitt im Vergleich zur Vorderseite besitzen.

Die US 2002/0166188 A1 offenbart eine Zahnbürste, bei der Ovale Löcher durch einen Zwischensteg in zwei Halbovale getrennt sind.

Aufgabe der Erfindung ist es, eine Borstenträger-Spritzgießvorrichtung zum Herstellen von Bürsten zu schaffen, durch die die Bürsten einfacher und kostengünstiger hergestellt werden. Derdurch die Vorrichtung hergestellte Borstenträger zeichnet sich durch einen vergleichsweise geringen Herstellungspreis aus.

Die Erfindung sieht eine Borstenträger-Spritzgießvorrichtung zum Spritzgießen eines Borstenträgers einer Bürste mit den Merkmalen des Anspruchs 1 vor.

Der Begriff "Borstenträger" umfasst sowohl vorgefertigte Bürstenkörper mit Stiel, Hals und Kopfabschnitt mit Öffnungen darin (wobei die Bürstenkörper gegebenenfalls auch noch mit einer zweiten oder dritten oder weiteren Komponente überspritzt werden) als auch Kopfplatten mit Öffnungen, die am sogenannten Bürstenkörper angebracht werden.

Die erfindungsgemäße Vorrichtung sieht keine aufwendige spanende Bearbeitung zum Herstellen der Öffnungen im Borstenträger vor, sondern erzeugt die Öffnungen durch Vorsprünge in einer oder beiden Spritzgussformhälften. Die komplizierten Formen von neuartigen Zahnbürsten mit extrem großen, zum Teil länglichen Borstenbüscheln oder schräg verlaufenden Borstenbüscheln erforderten im Stand der Technik schräg verlaufende, durch spanende Bearbeitung oder aktive Schieber oder aktive Stempel erzeugte Öffnungen im Borstenträger. Dies macht die Spritzgießvorrichtung jedoch teuer und aufwendig in ihrer Herstellung. Bei der Erfindung hingegen wird ein Borstenträger mit Öffnungen durch Spritzgießen erzeugt, bei dem die Öffnungen auf der Vorderseite und auf der Rückseite anders ausgeführt sind, was wiederum durch die Vorsprünge erreicht wird. "Anders ausgeführt", dass andere Geometrien bei einer Öffnung bezüglich der Mündungen zur Vorder- und zur Rückseite realisiert werden. Unterschiedliche Geometrien heißt, dass eine andere geometrische Form und nicht etwa nur allein ein anders dimensionierter Querschnitt vorhanden ist, wie dies bei einer kreisrunden, sich lediglich verjüngenden Öffnung der Fall wäre. Beispiele für unterschiedliche Geometrien sind zum Beispiel ein rückseitiger kreisrunder Querschnitt, der vorderseitig in einen länglichen, eckigen oder streifenförmigen Querschnitt oder dergleichen übergeht. Anders bedeutet aber auch, dass ein Vorsprung, der vorderseitig eine Öffnungsmündung erzeugt, wenigstens zwei Vorsprünge kontaktiert, sodass sich die zugeordnete Öffnung zur Rückseite in mehrere Teilöffnungen aufspaltet, die in mehrere Mündungen auf der Rückseite auslaufen.

Die Formhälften müssen nicht einstückig ausgebildet sein, vielmehr können auswechselbare Formteile in Aufnahmeteile eingebracht werden, sodass zur Herstellung anderer Bürsten nur die Formteile ausgewechselt werden, zum Beispiel der sogenannte Kopfeinsatz, der zum Aufnahmeteil auch aktiv verfahren werden kann, zum Beispiel zum Auswerfen und Weitertransportieren der gespritzten Borstenträger.

Der eine Öffnung definierende Vorsprung bzw. die ein Öffnung definierenden Vorsprünge sind gemäß der bevorzugten Ausführungsform senkrecht zur Fläche der zugeordneten Formhälfte, an der sie befestigt sind, gesehen hinterschnittsfrei ausgebildet. Durch die hinterschnittsfreie Ausbildung kann beim Öffnen des Werkzeugs der Borstenträger problemlos entformt werden. Ferner ist der Herstellungsaufwand für die Spritzgussformhälften geringer.

Die bevorzugte Ausführungsform sieht sogar vor, dass die Spritzgießvorrichtung schieberfrei ausgeführt ist, das heißt es wird kein Schieber oder Stempel oder dergleichen schräg zur Entformungsrichtung aktiv bewegt, um schräg verlaufende Öffnungen oder Hinterschnitte zu erzeugen.

Der Begriff "Fläche", der hier verwendet wird, bezeichnet nur den Teil der jeweiligen Formhälfte, der die Vorder- oder Rückseite des Borstenträgers definiert. Darüber hinaus sind natürlich noch weitere Flächen in den Kavitäten vorhanden, die zum Beispiel die Seitenflächen oder gegebenenfalls Hals und Stiel des Bürstenkörpers definieren.

Die, insbesondere alle Öffnungen, haben ein freies Ende, zu dem hin sie sich verjüngen.

Es ist auch denkbar, dass die Vorsprünge oder einige Vorsprünge sich zuerst verjüngen und dann zum freien Ende hin, in ein zylindrisches Ende auslaufen.

Die Vorsprünge können ein freies Ende mit einer flachen Stirnseite haben, die insbesondere senkrecht zur Entformungsrichtung verläuft.

Das freie Ende mit der flachen Stirnseite endet insbesondere in der Teilungsebene der Formhälften.

Von den sich ergänzenden, zugeordneten Vorsprüngen, das heißt von den aufeinander zulaufenden und sich berührenden Vorsprüngen, kann einem Vorsprung an der zweiten Fläche wenigstens ein Vorsprung der ersten Fläche zugeordnet sein, der zur Bildung eines Trichters der zugeordneten, herzustellenden Öffnung einen konisch zulaufenden Ansatz haut. Die sich zur Brücke ergänzenden Vorsprünge haben also unterschiedliche Geometrien, um unterschiedliche Aufgaben zu erfüllen. Beispielsweise kann der rückseitige Vorsprung zur Bildung eines Einführtrichters für die Borstenbüschel konisch zulaufend ausgeführt sein, wogegen der zugeordnete Vorsprung auf der zweiten Fläche zum Beispiel zylindrisch ausgebildet ist. Dies ist jedoch nur ein Ausführungsbeispiel, welches nicht einschränkend zu verstehen ist.

Es ist auch vorteilhaft, wenn wenigstens zwei voneinander beabstandete Vorsprünge, die beide konisch zulaufen, von der ersten Fläche ausgehen und auf einen gemeinsamen Vorsprung an der zweiten Fläche im geschlossenen Zustand der Vorrichtung treffen. Das bedeutet, dass der dadurch hergestellte Borstenträger einen Steg zwischen dem Abstand der beiden Vorsprünge der ersten Fläche aufweist. Es entstehen zwei oder mehr nebeneinander liegende Einführtrichter, die aber nur einer von der Vorderseite ausgehenden Öffnung zugeordnet sind. Dies erlaubt es, über die singulären Öffnungen von der Rückseite her einzelne Borstenbüschel einzuschieben, die sich dann aber zur Vorderseite hin vereinigen oder, mit anderen Worten, in eine Öffnung übergehen. Damit lassen sich übergroße, zum Beispiel längliche, runde oder kreuzförmige Büschel erzeugen. Gerade die mehreren Trichter auf der Rückseite führen die einzelnen Büschel und erlauben ein Einstoßen eines Büschels auch dann, wenn bereits ein anderes Büschel, mit dem es sich vereinigen muss, zuvor eingestoßen wurde. Der Steg dient damit als Führungsmittel und als abschnittsweises Trennungsmittel zwischen den einzelnen, sich dann im Borstenträger zur Vorderseite vereinigenden Borstenbüschel.

Um den Verlauf der Öffnung zu optimieren, keine randseitigen Borsten oder Filamente beim Einstoßen zu knicken, sondern eine hindernisfreie Öffnung zu bieten, kann die Stirnseite des Vorsprungs der zweiten Fläche auf den Stirnseiten der Vorsprünge der ersten Fläche aufliegen. Die Ränder der Stirnseiten der Vorsprünge der ersten Fläche, ausgenommen der Abschnitt in ihrem Zwischenraum, der den Steg erzeugt, sind ohne seitlichen Versatz zu dem Rand der Stirnseite des Vorsprungs der zweiten Fläche angrenzend ausgeführt. Der Rand der singulären Öffnung, die von der zweiten Fläche ausgeht, geht damit absatzlos in die zugeordneten, mehreren Öffnungen, die durch die Vorsprünge an der ersten Fläche gebildet werden, über.

Alternativ oder zusätzlich kann einem Vorsprung an der zweiten Fläche ein einziger Vorsprung an der ersten Fläche zugeordnet sein, wobei der Vorsprung an der ersten Fläche wenigstens zwei konisch zulaufende, nebeneinander angeordnete Abschnitte zur Bildung von Trichtern hat. Bei dieser Ausführungsform sind zwar auch mehrere Trichter an der Rückseite des gespritzten Borstenträgers vorgesehen, die sich vorderseitig zu einer Öffnung vereinen, jedoch sind diese beiden Trichter nicht durch einen Steg voneinander getrennt. Vielmehr ist auch von der Rückseite her nur eine einzige Öffnung vorgesehen, die sich jedoch zur Rückseite zu mehreren nebeneinander angeordneten Trichtern aufweitet.

Der Vorsprung an der zweiten Fläche ist, wenn eine Bürste mit länglichen Borstenbüscheln hergestellt werden soll, in Draufsicht gesehen langgestreckt.

Die bevorzugte Ausführungsform der Erfindung sieht vor, dass alle Vorsprünge in Entformungsrichtung verlaufende Mittelachsen besitzen und nicht schräg zur Entformungsrichtung verlaufen. Diese Mittelachsen werden dadurch definiert, dass schichtweise, und zwar parallel zur Trennebene, virtuelle Schnittebenen durch die Vorsprünge gelegt werden und Flächenschwerpunkte bestimmt werden, die sich zur Mittelachse ergänzen.

Obwohl, wie zu Beginn gesagt, der Borstenträger auch nur ein Trägerplättchen sein kann, das dann am Bürstenkörper (Kopf, Stiel und Hals der Bürste) angebracht ist, sieht die bevorzugte Ausführungsform der Erfindung vor, dass die Kavität den Bürstenkopf samt Bürstenstiel bildet.

Die erfindungsgemäße Vorrichtung kann eine Mehrkomponenten-Spritzgussvorrichtung sein, bei der Bürstenkörper in mehreren Schritten gespritzt werden und/oder elastische Elemente neben den Borstenbüscheln mit angespritzt werden können. Auch kopfrückseitige weichelastische Zungenreiniger oder weichelastische Griffpartien können mit anderen Komponenten gespritzt werden.

Die erfindungsgemäße Vorrichtung sieht insbesondere vor, dass in den Formhälften mehrere nebeneinander angeordnete Kavitäten zum gleichzeitigen Herstellen von mehreren Borstenträgern vorhanden sind. Hier spricht man von Einfach- oder Mehrfachwerkzeugen, bei denen ein bzw. mehrere Borstenträger gespritzt werden.

Das Spritzgusswerkzeug kann natürlich auch so ausgebildet sein, dass eine Formhälfte, die sogenannte Auswurfseite, oder ein Teil davon (zum Beispiel ein sogenannter Kopfeinsatz), in welcher bzw. in welchem die gespritzten Borstenträger nach dem Öffnen der Vorrichtung verbleiben, in eine andere Station weitergetaktet werden, wo diese Borstenträger weiterverarbeitet werden, zum Beispiel mit einer nachfolgenden Komponente umspritzt werden. Die entsprechenden Formhälften können zum Beispiel auf einem Drehwerkzeug oder längs einer Bahn bewegt werden.

Für zumindest eine herzustellende Öffnung ist der Querschnitt des zugeordneten Vorsprungs am Übergang zur ersten Fläche und der Querschnitt am Übergang zur zweiten Fläche mit unterschiedlichen Geometrien versehen, wie zuvor schon erläutert. Zusätzlich können die Querschnitte in Draufsicht betrachtet seitlich versetzte Flächenschwerpunkte haben.

Bei den bisherigen Borstenträgern wurden beispielsweise zur Verankerung von schräg verlaufenden Borstenbüscheln schräge Bohrungen in den Borstenträgern eingebracht, was herstellungstechnisch aufwendig ist. Solche schräg gebohrten Öffnungen sind bei der Erfindung nicht vorgesehen, um schräge Büschel im Borstenträger zu verankern.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Zahnbürste, die einen in der erfindungsgemäßen Vorrichtung hergestellten Borstenträger aufweist,
- Figur 2 den Bürstenkopf einer Zahnbürste, die ebenfalls einen in der erfindungsgemäßen Vorrichtung hergestellten Borstenträger besitzt, wobei hier nur ein Borstenbüschel zur Vereinfachung dargestellt ist,
- Figur 3 eine Draufsicht auf die Rückseite des Borstenträgers nach Figur 2,
- Figur 4 eine Schnittansicht des Borstenträgers nach Figur 3 während des Bestopfens,
- Figur 5 den Borstenträger nach Figur 4 nach dem Bestopfen,
- Figur 6 eine alternative Ausführungsform eines bereits bestopften Borstenträgers, der in der erfindungsgemäßen Vorrichtung hergestellt ist,
- Figur 7 eine weitere Ausführungsform des in der erfindungsgemäßen Vorrichtung hergestellten Borstenträgers, von der Rückseite aus gesehen,
- Figur 8 eine Draufsicht auf die Vorderseite eines Borstenträgers, der nur zur Erläuterungszwecken dargestellt ist,
- Figur 9 den Borstenträger nach Figur 8 von der Rückseite aus gesehen,
- Figur 10 den Borstenträger nach Figur 9 in leicht perspektivischer Ansicht, ebenfalls von der Rückseite aus gesehen,
- Figur 11 den bestopften Borstenträger nach den Figuren 8 bis 10 vor dem Befestigen der Borstenbüschel,
- Figur 12 eine Schnittansicht durch einen bestopften Borstenträger, der in der erfindungsgemäßen Vorrichtung hergestellt worden ist,
- Figur 13 eine Seitenansicht des erfindungsgemäßen Spritzgießwerkzeugs,
- Figur 14 eine vergrößerte Draufsicht auf die für die Herstellung der Rückseite des Borstenträgers verantwortliche Spritzgussformhälfte der erfindungsgemäßen Vorrichtung,
- Figur 15 eine der Formhälfte nach Figur 14 gegenüberliegende Formhälfte in vergrößerter Ansicht, die für die Herstellung der Vorderseite des Borstenträgers verantwortlich ist,
- Figur 16 einen Schnitt durch die geschlossene Vorrichtung mit den Formhälften nach den Figuren 14 und 15,
- Figur 17 eine nur zur Erläuterungszwecken dargestellte Ausführungsform einer Vorrichtung, wobei in Figur 16 die Spritzgussformhälfte in vergrößerter Ansicht gezeigt ist, die für die Herstellung der Rückseite des Borstenträgers verantwortlich ist, und
- Figur 18 die der Formhälfte nach Figur 16 gegenüberliegende Formhälfte, die für die Herstellung der Vorderseite des entsprechenden Borstenträgers verantwortlich ist.

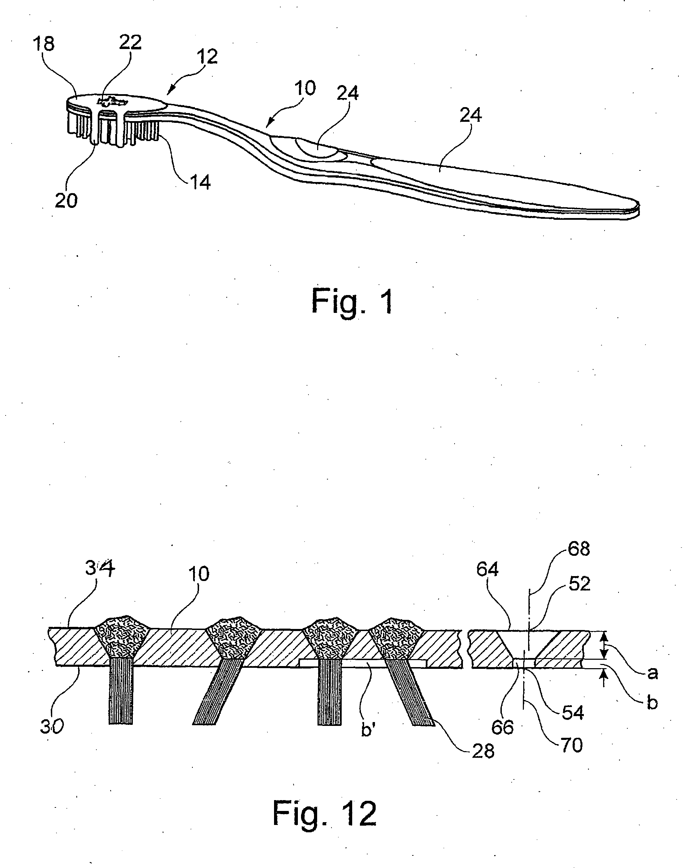

In Figur 1 ist eine Zahnbürste dargestellt, die aus mehreren Abschnitten besteht und unter anderem durch ein Mehrkomponenten-Spritzgussverfahren hergestellt ist.

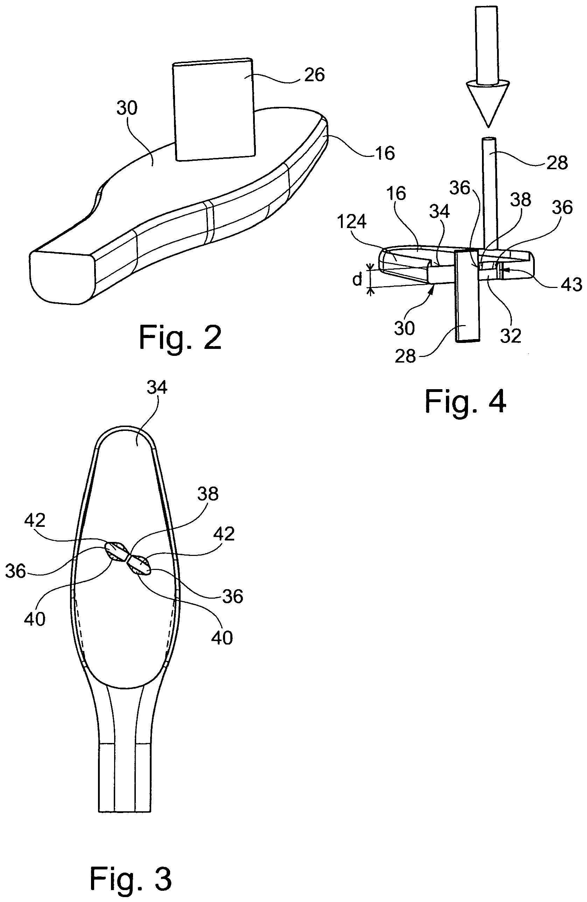

Die Zahnbürste weist einen Bürstenkörper auf, welcher den Stiel, den Hals und den Kopf 12 hat. Der Bürstenkörper ist durch ein Spritzgießverfahren hergestellt. Borstenbüschel 14 stehen von der Vorderseite des Kopfes 12 ab und bestehen aus zahlreichen parallelen Filamenten. Die Borstenbüschel 14 sind an einem sogenannten Borstenträger 16 befestigt. Der Borstenträger 16 ist in Figur 2 zu sehen.

Als Borstenträger 16 kann die zuerst gespritzte Komponente des Bürstenkörpers infrage kommen oder nur eine Art Plättchen, das ebenfalls durch Spritzgießen hergestellt ist und das am Rest des Bürstenkörpers zum Beispiel durch Umspritzen befestigt wird.

Auf der Rückseite des Bürstenkopfes 12 ist eine elastomere Komponente 18 aufgespritzt, die sich auch bis zur Vorderseite erstreckt und dort elastomere Finger 20 ausbildet. Solche elastomeren Finger 20 können jedoch nicht nur am Rand des Borstenträgers 16 entlang verlaufen, sondern sich auch durch Öffnungen im Borstenträger 16 von der Rückseite ausgehend nach vorne erstrecken. Mit unterbrochenen Linien ist in Figur 1 ein entsprechendes elastomeres Element 22 (hier als Beispiel kreuzförmig) angedeutet, welches sich durch eine kreuzförmige Öffnung im Borstenträger 16 nach vorne erstreckt, um gegenüber der Vorderseite des Borstenträgers 16 vorzustehen, vorzugsweise bis zur entsprechenden Spitze der Borstenbüschel 14.

Darüber hinaus sind auch im Bereich des Stieles elastomere Abschnitte 24 durch eine weitere Spritzgusskomponente erzeugt.

Die in Figur 1 gezeigte Ausführungsform zeigt optionale Merkmale für sämtliche nachfolgenden Ausführungsformen, die nur im Detail dargestellt sind.

Figur 2 zeigt den Borstenträger 16 und ein besonderes Borstenbüschel 26, welches aus mehreren Einzel-Borstenbüscheln 28 (siehe Figur 4) zusammengesetzt ist und als vereinigtes Borstenbüschel 26 bezeichnet wird.

Die Form dieses vereinigten Borstenbüschels 26 kann beliebig sein, in der dargestellten Ausführungsform ist das Borstenbüschel 26 jedoch plattenförmig, das heißt es hat einen länglichen Querschnitt.

Die Herstellung einer Bürste mit einem solchen Borstenbüschel 26 wird im Folgenden dargestellt.

Der in Figur 2 dargestellte Borstenträger 16 hat im Bereich des vereinigten Borstenbüschels 26, von der Vorderseite 30 (siehe Figur 4) aus gesehen eine erste Öffnung 32, die sich zur Rückseite 34 des Borstenträgers in mehrere, hier beispielsweise zwei Teilöffnungen 36 aufzweigt. Die Teilöffnungen 36 sind durch einen Steg 38 voneinander getrennt.

Jede Teilöffnung 36 ist zur Rückseite 34, beginnend mit dem Steg (was nicht zwingend der Fall sein muss) trichterförmig aufgeweitet. Die Einführtrichter 40 (siehe Figur 3) erstrecken sich, ähnlich wie der Steg 38, über vorzugsweise 60 %, mindestens 10 % der Dicke d des Borstenträgers 16, angrenzend an die Trichter 40 gemessen.

Von der Rückseite aus werden die Borstenbüschel 28 in ihre zugeordneten Teilöffnungen 36 eingestoßen, wobei die Form des Borstenbüschels 28 vor dem Einstoßen anders sein kann als in der gestopften Position, wenn sie vorderseitig aus dem Borstenträger 16 herausragen.

Der Steg 38 vereinfacht das separate Einführen der Borstenbüschel 28, die jedoch nach dem Steg 38 aufgrund der gemeinsamen Öffnung 32 ineinander übergehen und sich zu einem gemeinsamen Borstenbüschel 26 vereinigen.

Geometrie, Gestalt und Ausrichtung der ersten Öffnung 32 relativ zur Vorder- oder Rückseite 30, 34 können beliebig sein. Insbesondere kann der Teil der ersten Öffnung 32, der sich vom Steg 28 oder von den Trichtern 40 bis zur Vorderseite 30 erstreckt, anders relativ zur Vorder- und Rückseite ausgerichtet sein als die Teilöffnungen 36.

Figur 3 zeigt die Rückseite 34 des Borstenträgers 16, wobei die beiden Trichter 40 gut zu erkennen sind. Diese Trichter laufen dann in zwei schlitzförmige Querschnitte 42 aus, die den Übergang der beiden Teilöffnungen 36 in die erste Öffnung 32 darstellen. In Figur 4 ist gut zu erkennen, dass der Übergang zwischen den Öffnungen 42 und der ersten Öffnung 32 absatzlos erfolgt, sodass die Ränder 43 der entsprechenden Öffnungen, bis auf den Steg 38, ohne seitlichen Versatz exakt zueinander ausgerichtet und sozusagen deckungsgleich sind.

Durch die Trichter 40 auf der Rückseite lassen sich die Borstenbüschel 28 sehr leicht und sicher einführen, ohne dass es zur Vorderseite hin zum Knicken oder Anstoßen der nachfolgend eingeführten Borstenbüschel 28 kommt. Die erste Öffnung 32 auf der Vorderseite dient vor allem der Positionierung der Filamente und damit des gemeinsamen Borstenbüschels 26 im befestigten Zustand.

Die Mündungen der einem vereinigten Borstenbüschel zugeordneten Öffnungen 32, 36 zur Vorder- und Rückseite unterscheiden sich in der Geometrie (Schlitz zu Vorderseite, im Wesentlichen Ovale zur Rückseite) und Anzahl (eine Mündung zur Vorderseite, zwei zur Rückseite).

Bei der Ausführungsform nach Figur 2 verläuft das gemeinsame Borstenbüschel 26 im Wesentlichen senkrecht zur Vorder- und/oder Rückseite 30 bzw. 34.

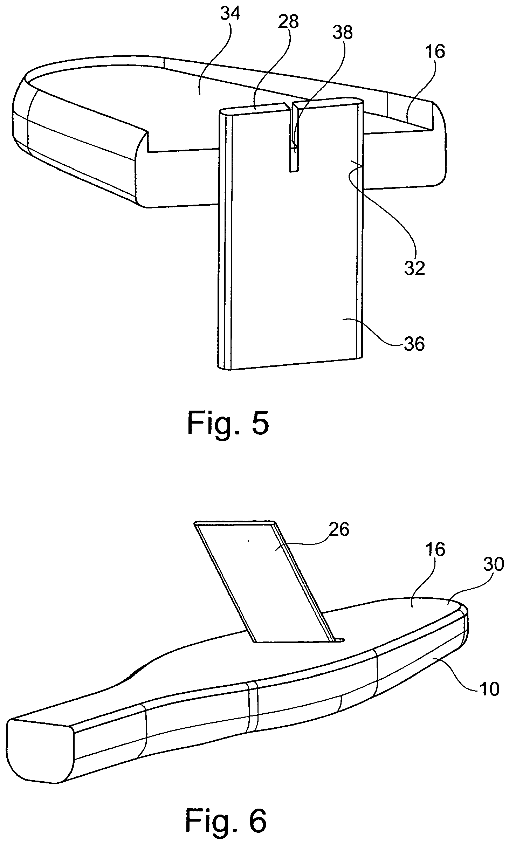

Die eingestopften Borstenbüschel 28 stehen nach dem Stopfen rückseitig gegenüber der Rückseite 34 vor (siehe Figur 5).

Bei der Ausführungsform nach Figur 6 verläuft das vereinigte Borstenbüschel 26 schräg zur Vorderseite 30, zum Beispiel nach außen geneigt. Auch bei dieser Ausführungsform ist das vereinigte Borstenbüschel aus mehreren Einzelbüscheln 28 zusammengesetzt.

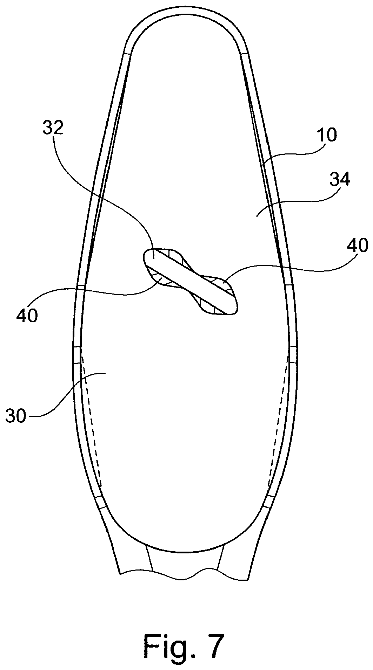

Die entsprechende Öffnung im Borstenträger 16 ist von der Rückseite 34 aus in Figur 7 dargestellt.

Die Öffnung 32 ist ebenfalls schlitzartig, hier ist jedoch kein Steg 38 von der Rückseite 34 ausgehend vorhanden. Vielmehr erstreckt sich die Öffnung 32 von der Vorder- bis zur Rückseite, wobei sie sich zur Rückseite hin in zwei Einführtrichter 40 aufweitet, die jedoch ineinander übergehen oder aneinander angrenzen, wie in Figur 7 zu sehen ist. Jeder der Trichter 40 ist für ein Borstenbüschel 28 vorgesehen, um dieses aufzunehmen und in den dann schmäler werdenden Teil der sich hier nicht aufzweigenden Öffnung 32 zu führen.

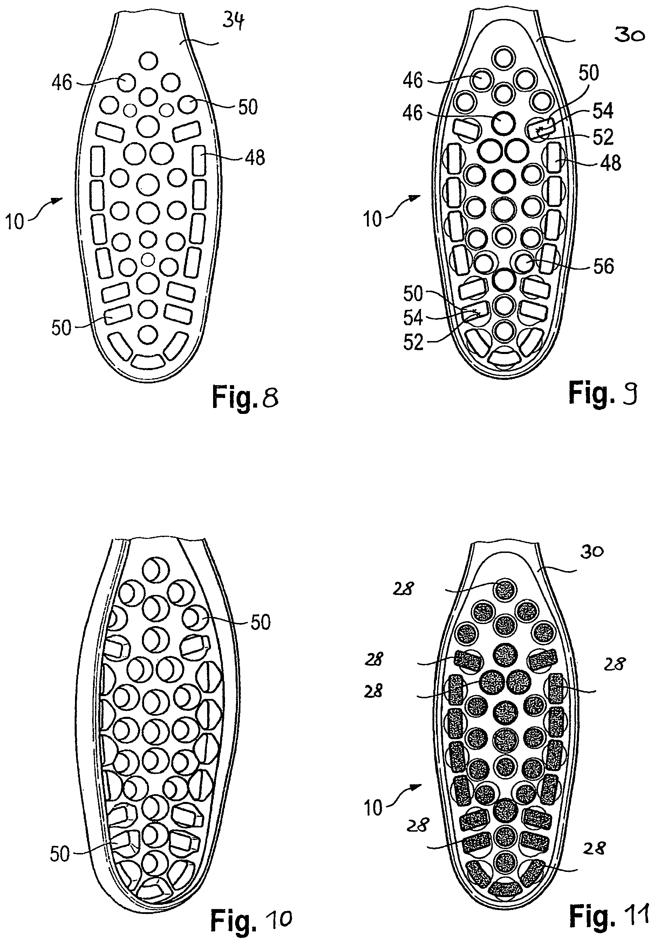

In den Figuren 8 bis 10 sind Vorder- und Rückansichten des teilweise noch unbestopften und in Figur 11 des bereits bestopften Borstenträgers 16 einer weiteren Ausführungsform dargestellt.

Figur 8 zeigt, dass die für die Geometrie, das heißt für den Querschnitt des jeweils eingebetteten Borstenbüschels verantwortliche vorderseitige Abschnitt der entsprechenden Öffnung unterschiedliche Querschnitte haben kann. Es gibt kreisrunde Öffnungen, die unterschiedliche Querschnittsflächen aufweisen, das heißt dickere und dünnere Büschel aufnehmen können. Darüber hinaus sind zur Bildung von quaderförmigen Borstenbüscheln streifenförmige, mehr oder weniger rechteckige Öffnungen 48 vorgesehen. Das jeweilige Lochbild von Vorder- und Rückseite aus gesehen ist etwas unterschiedlich, was daran liegt, dass die Öffnungen nicht komplett zylindrisch ausgeführt sind, das heißt nicht komplett zylindrisch von der Vorder- bis zur Rückseite verlaufen. Der sogenannte rückseitige Querschnitt, das heißt die Mündung der jeweiligen Öffnung an der Rückseite 34 ist unterschiedlich zum vorderseitigen Querschnitt, also der Mündung der jeweiligen Öffnung an der Vorderseite 30.

Insbesondere haben die Öffnungen ihren geringsten Querschnitt an der Mündung zur Vorderseite, das heißt am vorderseitigen Querschnitt.

Die größte Querschnittsfläche bildet der rückseitige Querschnitt jeder Öffnung.

Einige Öffnungen 46, 50 werden zusätzlich zu den Öffnungen 48 im Folgenden etwas detaillierter betrachtet.

Von der Rückseite 30 (siehe Figur 9) aus betrachtet verlaufen die Öffnungen 46 bis 50 leicht konisch zur Vorderseite 34 hin. Es ergibt sich jeweils ein von der Rückseite 30 ausgehender Trichter, der jedoch nicht bis komplett zur Vorderseite 34 verläuft, sondern vorher endet.

Die Öffnungen 46 sind Standard-Öffnungen mit kreisrundem vorderseitigen und rückseitigen Querschnitt, in denen die Borstenbüschel auch senkrecht zur Vorderseite 34 verankert werden. Zu erkennen ist dabei unter anderem, dass die Öffnungen 46 mit kreisrundem Querschnitt unterschiedliche Querschnittsflächen an der Vorderseite haben, dabei aber gleiche Querschnittsflächen an der Rückseite.

Es sind im Borstenträger 16 jedoch auch Öffnungen 48 vorhanden, bei denen der rückseitige Querschnitt deutlich größer als der vorderseitige Querschnitt ist, jedoch die Geometrie des rückseitigen Querschnitts eine andere als des vorderseitigen Querschnitts ist. Beispielsweise, dies ist nicht einschränkend zu verstehen, ist der rückseitige Querschnitt an der Mündung der Öffnung durch einen Kreis gebildet, von dem aus sich ein Trichter bildet. Der vorderseitige Querschnitt der Öffnungen 48 hat jedoch eine Streifenform oder eine ovale Form, also eine andere Querschnittsgeometrie als der rückseitige Querschnitt.

Schließlich sind Öffnungen 50 vorhanden, bei denen erneut der rückseitige Querschnitt größer als der vorderseitige Querschnitt ist sowie eine andere Geometrie hat. Die Öffnungen 50 zeichnen sich darüber hinaus auch dadurch aus, dass der sogenannte Flächenschwerpunkt des rückseitigen Querschnitts (Mittelpunkt 52 des entsprechenden Kreises) seitlich versetzt zum Flächenschwerpunkt 54 des vorderseitigen Querschnitts liegt, wenn man senkrecht auf die Rück- oder Vorderseite des Borstenträgers sieht. Die Öffnungen 50 sind insbesondere, dies ist auch nicht einschränkend zu verstehen, diejenigen Öffnungen, in denen die Borstenbüschel eingesetzt sind, die schräg zur Vorderseite 34 verlaufen.

Die Öffnungen 56 haben beispielsweise einen kreisrunden rückseitigen Querschnitt und einen mehreckigen vorderseitigen Querschnitt.

In Figur 11 sind die in die Öffnungen eingesetzten Borstenbüschel 28, genauer gesagt die gegenüber der Rückseite 30 vorstehenden Büschelenden der jeweiligen Borstenbüschel zu sehen.

Beim Stopfen grenzt ein sogenanntes Ausrichtwerkzeug vorderseitig an den Borstenträger 16 an. Das Ausrichtwerkzeug hat Aufnahmeöffnungen, die mit den vorderseitigen Mündungen der Öffnungen 32 im Borstenträger 16 fluchten. Für solche Borstenbüschel 28, die schräg zur Vorderseite des Borstenträgers 16 verlaufen sollen, verlaufen auch die entsprechenden Aufnahmeöffnungen schräg. Solange die Borstenbüschel noch in den Aufnahmeöffnungen im Ausrichtwerkzeug stecken, werden die Borstenbüschel rückseitig befestigt, vorzugsweise vorher noch rückseitig beschnitten.

Das Befestigen erfolgt beispielsweise durch Erhitzen der Büschelenden, sodass die Borsten miteinander verschmelzen, wie dies in Figur 12 gezeigt ist. Die Borstenbüschel 28 verschmelzen zu einem Kunststoffklumpen, der die Öffnung im Borstenträger komplett oder großteils ausfüllt. Die geschmolzenen Büschelenden können entweder voneinander beabstandet sein, oder es kann sich auf der Rückseite 30 auch noch ein dünner Film von geschmolzenem Kunststoff ergeben.

Alternativ zum Verschmelzen der Borstenbüschel können diese auch verklebt oder umspritzt werden.

Nach dem Befestigen wird der bestopfte Borstenträger 16 zumindest rückseitig im Bereich des Kopfes zugespritzt, wobei gleichzeitig auch der Stiel umspritzt werden kann.

Figur 12 zeigt auch, dass die Öffnungen mit unterschiedlichen Geometrien und den versetzten Flächenschwerpunkten unterschiedliche Abschnitte haben. Vom rückseitigen Querschnitt 64 aus verläuft ein Öffnungsquerschnitt, der trichterförmig ist, über eine Tiefe a, die vorzugsweise mehr als 60 % der Dicke des Borstenträgers 16 in diesem Bereich entspricht. Dieser Öffnungsquerschnitt ist senkrecht zur Vorder- und/oder Rückseite 34 bzw. 30 ausgerichtet, was durch die Mittelachse 68 symbolisiert ist.

Der von der Vorderseite ausgehende, sogenannte vorderseitige Querschnitt 66 der Öffnung erstreckt sich über eine Tiefe b, ohne dass ein Zwischenabschnitt oder ein Schrägkanal zwischen den beiden Öffnungsabschnitten vorhanden wäre. Der sich über die Tiefe b erstreckende Abschnitt der Öffnung ist ein zylindrischer, zum Beispiel schlitzförmiger Abschnitt.

In Figur 12 ist darüber hinaus noch zu erkennen, dass an der Vorderseite 34 auch ein gemeinsamer Öffnungsabschnitt (bei b') für mehrere benachbarte Öffnungen vorhanden sein kann. Hier wäre es unter Umständen möglich, dass der Konus des rückseitigen Öffnungsabschnitts der jeweiligen Öffnung direkt in den vorderseitigen Öffnungsabschnitt übergeht, sodass die engste Querschnittsfläche der jeweiligen Öffnung sozusagen eine ringförmige Linie, durch eine Kante gebildet ist. Bei der rechten Öffnung in Figur 12, die nicht bestopft dargestellt ist, ist der engste Querschnitt durch den zylindrischen Öffnungsabschnitt mit dem Querschnitt 66 definiert, also nicht durch eine reine Kante.

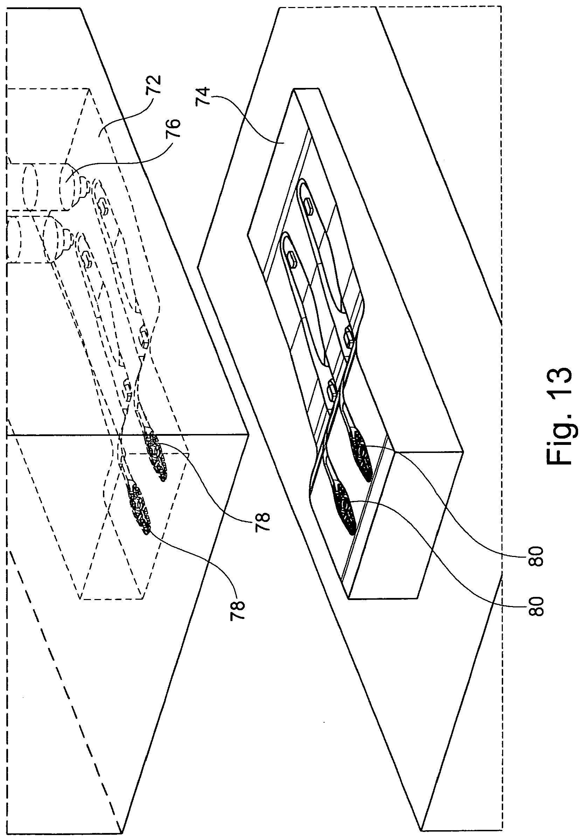

In Figur 13 ist die Borstenträger-Spritzvorrichtung zum Spritzgießen der dargestellten Borstenträger dargestellt. Die Vorrichtung hat eine erste Spritzgussformhälfte 72 und eine gegenüberliegende zweite Spritzgussformhälfte 74. Die erste Spritzgussformhälfte 72 ist in der dargestellten Ausführungsform, was nicht einschränkend zu verstehen ist, die sogenannte Spritzseite, denn sie besitzt Heißkanaldüsen 76 zum Einbringen des flüssigen Kunststoffmaterials. Die zweite Spritzgussformhälfte 74 oder das eventuell separat hierzu bewegliche Kopfteil wird als die sogenannte Auswurfseite bezeichnet, an der der gespritzte Borstenträger nach dem Öffnen der Vorrichtung haften bleibt.

Jede der beiden Formhälften 72, 74 hat Teilkavitäten, die sich in geschlossenem Zustand der Vorrichtung zu einer bis auf die Heißkanäle 76 geschlossenen Kavitäten ergänzen. Bei der dargestellten Ausführungsform ist ein Mehrfachwerkzeug dargestellt, das heißt hier sind mehrere Kavitäten zum gleichzeitigen Spritzen von mehreren Borstenträgern 16 vorhanden. Die Teilkavitäten 78 in der ersten Spritzgussformhälfte liegen sozusagen jeweils paarweise den Teilkavitäten 80 in der zweiten Formhälfte 74 gegenüber.

Zur Erzeugung der verschieden ausgeführten Öffnungen hat zumindest eine der Formhälften 72, 74 angeformte Vorsprünge. Da die jeweiligen Vorsprünge die Negativform zu den Öffnungen bilden, kann auf intensive Details bezüglich der Form der Vorsprünge auf die vorgenannte ausführliche Schilderung der Geometrien der Öffnungen in den Borstenträgern 16 nach den Figuren 1 bis 12 verwiesen werden. Diese Vorsprünge können einstückig sein oder Teil eines separaten, auswechselbaren Einsatzes sein, sodass eine Formhälfte unter anderem aus einem eventuell schnell wechselbaren Formteil und einem Aufnahmeteil bestehen kann.

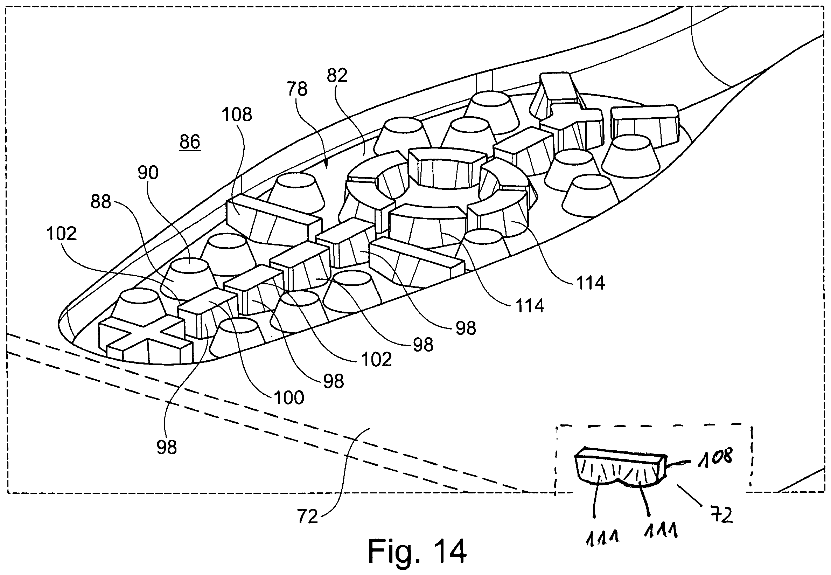

Figur 14 zeigt eine vergrößerte Draufsicht auf die erste Spritzgussformhälfte 72, die am Grund der Teilkavität 78 eine Fläche 82 aufweist, die im Folgenden als erste Fläche bezeichnet wird und die dann die Rückseite 30 des daran gespritzten Borstenträgers 16 definiert.

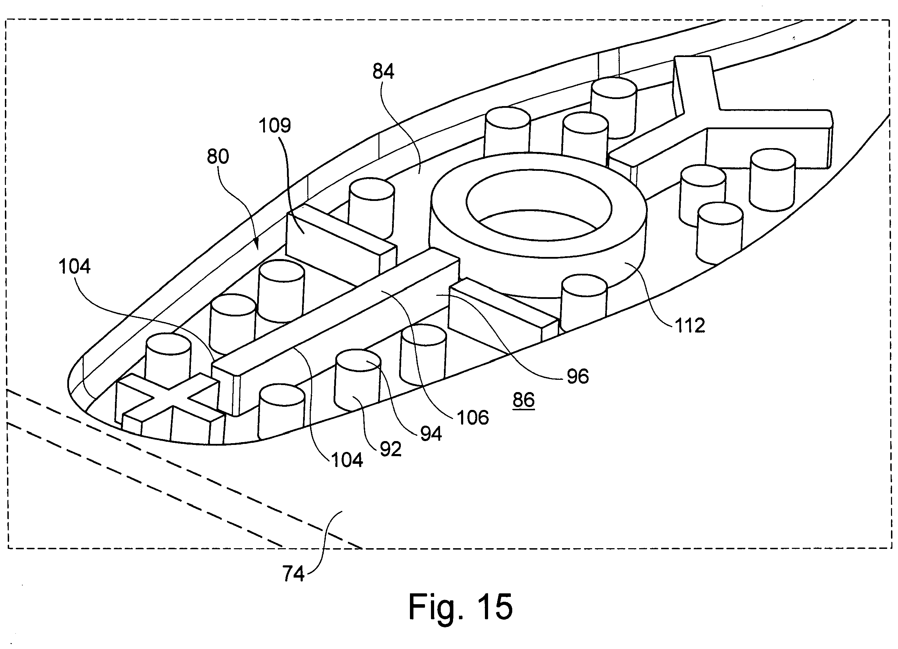

Figur 15 ist eine Ansicht auf die entsprechende zweite Spritzgussformhälfte 74 mit der Teilkavität 80 und der darin vorgesehenen tiefsten Fläche, die im Folgenden als zweite Fläche 84 bezeichnet wird und die die Vorderseite 34 des Borstenträgers 16 abbildet.

Sowohl von der ersten Fläche 82 als auch von der zweiten Fläche 84 stehen bei dieser Ausführungsform zahlreiche einstückig angeformte Vorsprünge in Richtung zur sogenannten Trennebene 86 vor, an der die Spritzgussformhälften 72, 74 im geschlossenen Zustand anliegen.

Wie beispielsweise anhand der Figuren 8 bis 11 oder der Figuren 3 und 7 zu sehen war, sind für fast alle zu erzeugenden Öffnungen und damit für fast alle Vorsprünge die Querschnitte am Übergang der ersten Fläche 82 zum Vorsprung (das entspricht der Mündung der Öffnung im entstehenden Borstenträger 16 zur Rückseite 30) anders als der entsprechende Querschnitt des derselben Öffnung zugeordneten Vorsprungs am Übergang der zweiten Fläche 84 zum zugeordneten Vorsprung (das entspricht dem Mündungsquerschnitt der Öffnung zur Vorderseite 34 hin).

Beispiele hierfür werden im Folgenden erläutert.

Der Vorsprung 88 (siehe Figur 14) verjüngt sich von der Fläche 82 ausgehend hier zum Beispiel kegelförmig und endet in einer flachen Stirnseite 90, die auch in der Trennebene 86 liegt.

Der Querschnitt des Vorsprungs 88 am Übergang zur ersten Fläche 82 ist eine ovale Fläche, deren Durchmesser größer ist als der der Stirnseite 90, die eine Kreisfläche bildet.

Der entsprechende Vorsprung 92 (siehe Figur 15) auf der zweiten Spritzgussformhälfte 74 ist zylindrisch ausgeführt mit einem Querschnitt, der dem der Stirnseite 90 entspricht, sodass die beiden Stirnseiten 94 und 90 bei geschlossener Vorrichtung vollflächig und komplett aneinander anliegen. Der Vorsprung 92 ergänzt also den Vorsprung 88, sodass sich eine durchgehende Brücke zwischen der ersten Fläche 82 und der zweiten Fläche 84 ergibt. Der Querschnitt des Vorsprungs 82 am Übergang zur zweiten Fläche 82 ist eine Kreisfläche mit anderem Flächeninhalt als die ovale Fläche.

Die Flächenschwerpunkte der Stirnseite 90 und des Querschnitts am Übergang des Vorsprungs 88 zur ersten Fläche 82 können in Draufsicht betrachtet seitlich versetzt zueinander liegen, um einen entsprechenden Verlauf einer Öffnung, wie der in Figur 12 anhand der ganz rechten Öffnung dargestellt ist, zu realisieren.

Der langgestreckte Vorsprung 96 in Figur 15 liegt mehreren, hier vier Vorsprüngen 98 auf der Formhälfte 72 gegenüber. Diese Vorsprünge 98 sind voneinander beabstandet, sodass ähnlich wie dies in Figur 4 zuvor dargestellt ist, sich zwischen den erzeugten Öffnungen jeweils ein Steg 38 im Borstenträger 16 ergibt.

Die Vorsprünge 98 haben eine trichterförmige Gestalt, wobei der Trichter nicht kegelförmig verläuft, sondern ähnlich wie in Figur 3 oder in Figur 9 gezeigt.

Die Vorsprünge 98 haben einen länglichen, jedoch bogenförmige Außenseiten aufweisenden Querschnitt am Übergang zur ersten Fläche 82 und eine rechteckige Stirnseite 100.

Für das sich ergebende langgestreckte gemeinsame Borstenbüschel werden folglich vier Einzelbüschel 28 über die sich ergebenden Trichter, die entsprechend der Vorsprünge 98 ausgebildet sind, eingeführt.

Für dieses gemeinsame Borstenbüschel hat die entsprechende Öffnung an der Vorderseite eine durch den Vorsprung 96 verantwortliche, langgestreckte Gestalt. Der entsprechende Querschnitt am Übergang zur zweiten Fläche 84 ist dementsprechend komplett anders als die Querschnitte der zugeordneten Vorsprünge 98 am Übergang zur ersten Fläche 82. Zum einen sind die Flächenschwerpunkte versetzt, zum andern sind die geometrischen Formen der Querschnitte unterschiedlich und schließlich ist auch die Anzahl der Querschnitte der zugeordneten Vorsprünge unterschiedlich.

Die Ränder 102 der Stirnseiten 100 entsprechen den Rändern 104 der Stirnseite 106 des Vorsprungs 96. Es gibt keinen seitlichen Versatz der Ränder 102, 104. Die Stirnseiten 106 und 100 liegen vollflächig aufeinander an, wenn die Vorrichtung geschlossen ist.

Zu erkennen ist, dass dem Vorsprung 96 mehrere Vorsprünge 98 auf der gegenüberliegenden Formhälfte zugeordnet sind, wogegen dem Vorsprung 92 auf der zweiten Formhälfte 74 nur ein Vorsprung 88 auf der ersten Formhälfte 72 zugeordnet ist.

Darüber hinaus gibt es noch andere Vorsprünge 108 (siehe Figur 14) mit konisch zum freien Ende zulaufenden Geometrien, die an der ersten Formhälfte 72 vorgesehen sind und Trichter in dem Borstenträger 16 ausbilden und die mit zylindrischen Vorsprüngen 110 auf der gegenüberliegenden Formhälfte 74 fluchten, und zwar ebenfalls absatzlos.

Auch ein ringförmiger Vorsprung 112 auf der zweiten Formhälfte 74 besitzt auf der ersten Formhälfte 72 entsprechende Vorsprünge 114, die voneinander beabstandet sind, und zwar in Umfangsrichtung, und am Übergang zur ersten Fläche 82 eine andere Geometrie haben als der entsprechende Vorsprung 112 am Übergang zur zweiten Fläche 84.

In Figur 14 ist auch der die nebeneinander liegenden, ineinander übergehenden Trichter 40 nach Figur 3 bildende Vorsprung 108 dargestellt, der zwei ineinander übergehende, konische Abschnitte 111 hat, die dann stirnseitig an einem Vorsprung 109 nach Fig. 15 anliegen würden.

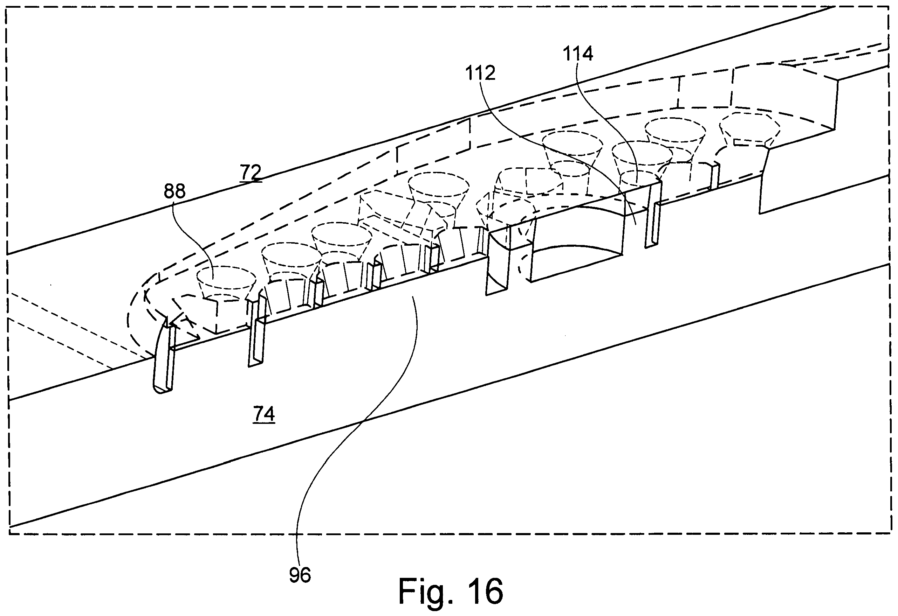

Figur 16 zeigt einen Längsschnitt durch die geschlossene Vorrichtung nach den Figuren 14 und 15.

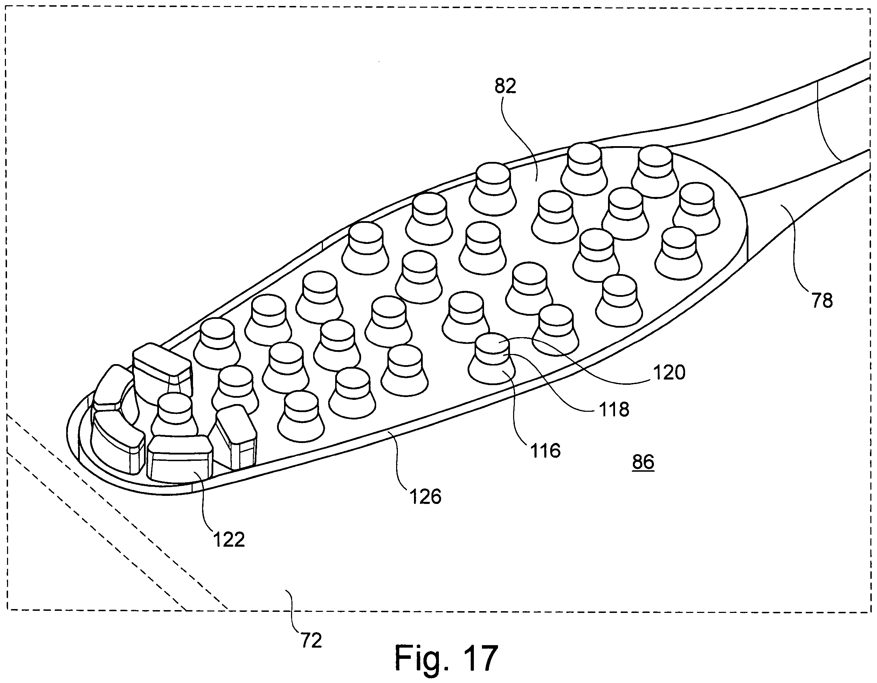

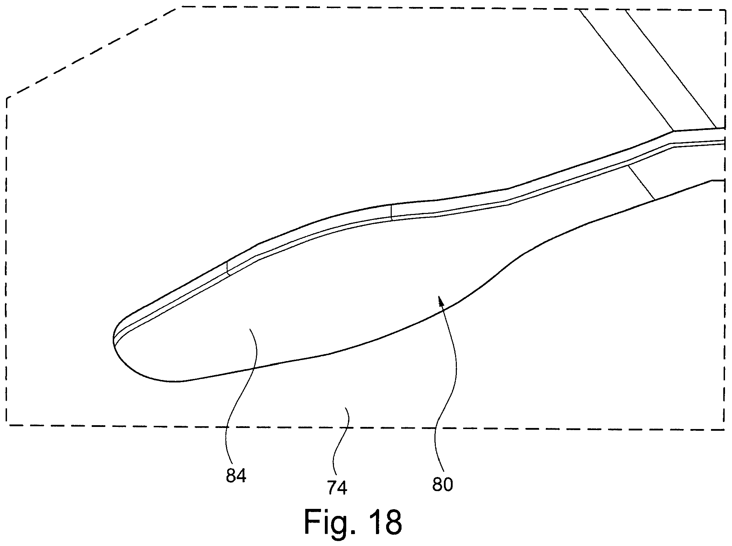

In den Figuren 17 und 18 sind zwei sich gegenüberliegende Formhälften 72, 74 dargestellt, die anders ausgeführt sind als bei der ersten Ausführungsform.

Die Vorsprünge 116, die von der ersten Fläche 82 ausgehen, laufen im Bereich des Ansatzes (Übergang des Vorsprungs 116 zur ersten Fläche 82) konisch, um dann in einem zylindrischen, freien Ende 118 zu enden. Die Stirnseite 120 ist flach und liegt oberhalb der Trennebene 86.

Darüber hinaus sind auch längliche Vorsprünge 122 vorhanden, welche einen konisch zum freien Ende zulaufenden Ansatz haben und in einem zylindrischen freien Ende (hier in Form eines Quaders) enden. Auch hier enden, wie bei den übrigen Ausführungsformen, alle Stirnseiten auf einer Ebene.

Die Teilkavität 78 formt den Stiel und den Hals der Bürste sowie einen die eigentliche Rückseite 30 umgebenden Rand 124 (siehe Figur 4) aus. Entsprechend ist in Figur 17 eine Art die erste Fläche 82 umgebender Kanal 126 in der ersten Spritzgussformhälfte 72 vorhanden.

Die zweite Spritzgussformhälfte 74 (siehe Figur 18), die die zweite Fläche 84 in der Teilkavität 80 besitzt, ist eben ausgeführt, ohne Vorsprünge.

Die Stirnseiten der Vorsprünge an der ersten Spritzgussformhälfte 72 liegen somit bei geschlossener Vorrichtung vollflächig an der zweiten Fläche 84 an. Damit bildet die jeweilige Stirnseite (zum Beispiel Stirnseite 120) der Vorsprünge in der ersten Spritzgussformhälfte 72 den entsprechenden Querschnitt des Vorsprungs am Übergang zur zweiten Fläche 84, denn diese Flächen liegen aneinander an, wenn die Vorrichtung geschlossen ist. Auch hier ist zu erkennen, dass die Querschnitte im Bereich des Übergangs der ersten Fläche zum angrenzenden Vorsprung 116, 122 anders sind (hier leicht oval) als die Querschnitte dieser Vorsprünge am Übergang zur zweiten Fläche (hier zum Beispiel kreisrund bzw. länglich).

Für sämtliche Vorsprünge aller Ausführungsformen gilt, dass diese senkrecht zur ersten und/oder zweiten Fläche 82 bzw. 84 gesehen hinterschnittsfrei ausgeführt sind.

Die erfindungsgemäßen Vorrichtungen, das heißt hier die Spritzgussformhälften 72, 74 haben keine Schieber, erst recht keine Schieber, die schräg verlaufen.

Die Entformungsrichtung der Spritzgussformhälften ist senkrecht zu der ersten und/oder zweiten Fläche 82 bzw. 84 und damit parallel zu den Mittelachsen (siehe beispielsweise Achsen 68, 70 in Figur 12) aller vorhandenen Vorsprünge.

Die Borstenträger werden generell mit Öffnungen hergestellt, ohne dass eine Nacharbeit notwendig ist, zum Beispiel durch Bohren oder Fräsen. Das heißt, die Öffnungen werden ausschließlich durch das Spritzgießen hergestellt.

Durch die besondere Spritzgießvorrichtung lassen sich Borstenträger erzeugen, durch die sehr einfach komplizierte Büschelformen erzeugt werden können, ohne dass der Aufwand für die Herstellung des Borstenträgers erhöht wird.

## Patentansprüche

1. Borstenträger-Spritzgießvorrichtung zum Spritzgießen eines Borstenträgers (16) einer Bürste, wobei der Borstenträger (16) Öffnungen (32; 46; 48; 50) aufweist, in die Borstenbüschel (28) gestopft werden, mit einer ersten und einer zweiten Spritzgussformhälfte (72, 74), die in geschlossenem Zustand zwischen sich wenigstens eine einen Borstenträger (16) abbildende, mit flüssigem Kunststoff zu befüllende Kavität begrenzen, wobei die erste Formhälfte (72) eine die Rückseite (34) des Borstenträgers (16) bildende erste Fläche (82) und die zweite Formhälfte eine die Vorderseite des Borstenträgers (16) bildende zweite Fläche (84) hat,
**dadurch gekennzeichnet, dass**
zur Bildung der Öffnungen (32) von der ersten und/oder zweiten Fläche (82, 84) ausgehende, vorstehende Vorsprünge (96, 98, 108, 109, 112, 114) vorhanden sind und der Querschnitt des Vorsprungs (96, 98, 108, 109, 112, 114) einer zugeordneten Öffnung am Übergang der ersten Fläche (82) zum angrenzenden Vorsprung (96, 98, 108, 109, 109, 112, 114) eine andere geometrische Form als der Querschnitt des derselben Öffnung zugeordneten Vorsprungs (96, 98, 108, 109, 109, 112, 114) am Übergang der zweiten Fläche (84) zum zugeordneten Vorsprung (96, 98, 108, 109, 112, 114) hat,
dass zum Herstellen zumindest einer Öffnung (32) von der ersten und der zweiten Fläche ausgehende, aufeinander zulaufende, sich im geschlossenen Zustand berührende und sich ergänzende Vorsprünge (96, 98, 108, 109, 112, 114) vorgesehen sind, wobei von den sich ergänzenden Vorsprüngen (96, 98, 108, 109, 112, 114) ein Vorsprung an der zweiten Fläche (84) wenigstens einem Vorsprung an der ersten Fläche (82) zugeordnet ist, der einen zur Bildung eines Trichters der zugeordneten, herzustellenden Öffnung (32) konisch zulaufenden Ansatz hat,
dass wenigstens zwei voneinander beabstandete Vorsprünge (98, 114), die beide konisch zulaufen, oder ein durch zwei nebeneinander angeordnete, ineinander übergehende, konisch zulaufende Abschnitte (111) gebildeter Vorsprung (108) von der ersten Fläche (82) ausgehen bzw. ausgeht und auf einen gemeinsamen Vorsprung (96, 112) an der zweiten Fläche (84) im geschlossenen Zustand der Vorrichtung treffen bzw. trifft.

2. Borstenträger-Spritzgießvorrichtung nach Anspruch 1, **dadurch gekennzeichnet, dass** der oder die eine Öffnung definierende Vorsprung bzw. Vorsprünge (96, 98, 108, 109, 112, 114) senkrecht zur zugeordneten Fläche (82, 84) derjenigen Formhälfte, an der sie befestigt sind, gesehen hinterschnittsfrei ausgebildet ist bzw. sind.

3. Borstenträger-Spritzgießvorrichtung nach Anspruch 1 oder 2, **dadurch gekennzeichnet, dass** die Vorrichtung schieberfrei ausgebildet ist.

4. Borstenträger-Spritzgießvorrichtung nach einem der vorhergehenden Ansprüche, **dadurch gekennzeichnet, dass** die Stirnseite (106) des Vorsprungs (96, 112) der zweiten Fläche (84) auf den Stirnseiten (100) der Vorsprünge (96, 112) der ersten Fläche (82) aufliegt, vorzugsweise wobei die Ränder (102) der Stirnseiten (100) der Vorsprünge (96, 112) der ersten Fläche (82), ausgenommen der Abschnitte in ihrem Zwischenraum, ohne seitlichen Versatz an den Rand (104) der Stirnseite (106) des Vorsprungs (96, 112) der zweiten Fläche (84) angrenzen.

5. Borstenträger-Spritzgießvorrichtung nach Anspruch 4, **dadurch gekennzeichnet, dass** ein Vorsprung (109) an der zweiten Fläche (84) einem einzigen Vorsprung (108) an der ersten Fläche (82) zugeordnet ist, die Vorsprünge (108, 109) im geschlossenen Zustand einander kontaktieren und der Vorsprung (108) an der ersten Fläche (82) wenigstens zwei konisch zulaufende, nebeneinander angeordnete Abschnitte (111) zur Bildung von Trichtern (40) hat.

6. Borstenträger-Spritzgießvorrichtung nach einem der vorhergehenden Ansprüche, **dadurch gekennzeichnet, dass** der Vorsprung an der zweiten Fläche in Draufsicht langgestreckt, bogenförmig oder kreuzförmig verläuft.

7. Borstenträger-Spritzgießvorrichtung nach einem der vorhergehenden Ansprüche, **dadurch gekennzeichnet, dass** alle Vorsprünge (96, 98, 108, 109, 112, 114) in Entformungsrichtung verlaufende Mittelachsen (68, 70) haben.

8. Borstenträger-Spritzgießvorrichtung nach einem der vorhergehenden Ansprüche, **dadurch gekennzeichnet, dass** für zumindest eine Öffnung der Querschnitt des zugeordneten Vorsprungs (96, 98, 108, 109, 112, 114) am Übergang zur ersten Fläche (82) und der Querschnitt am Übergang zur zweiten Fläche (84) derart andere Geometrien haben, dass zur ersten Fläche (82) eine runde und zur zweiten Fläche (84) eine eckige Geometrie haben.

## Claims

1. Bristle carrier injection moulding apparatus for injection moulding of a bristle carrier (16) of a brush, wherein the bristle carrier (16) comprises openings (32; 46; 48; 50) in which bristle tufts are stuffed (28), containing a first and a second half (72, 74) of an injection mould that define in a closed state at least one cavity between them that reproduces a bristle carrier (16) and is to be filled with liquid plastics, wherein the first half of the mould (72) has a first surface (82) forming the rear side (34) of the bristle carrier (16) and the second half of the mould has a second surface (84) forming the front surface of the bristle carrier (16),
**characterized in that**
in order to form the openings (32), projecting protrusions (96, 98, 108, 109, 112, 114) extending from the first and/or the second surface (82, 84) are provided and the cross-section of the protrusion (96, 98, 108, 109, 112, 114) of an associated opening at an interface of the first surface (82) to the adjacent protrusion (96, 98, 108, 109, 109, 112, 114) has another geometrical shape as the cross-section of the protrusion (96, 98, 108, 109, 109, 112, 114) associated to the same opening at the interface of the second surface (84) to the associated protrusion (96, 98, 108, 109, 112, 114),
in order to form at least one opening, protrusions (96, 98, 108, 109, 112, 114) extending from the first and the second surface, tapering convergently, contacting one another in a closed state and complementing one another are provided, wherein one protrusion of the complementing protrusions (96, 98, 108, 109, 112, 114) on a second surface (84) thereof is assigned to at least one protrusion on the first surface (82), which has a conical tapered projection adapted to form a funnel of the assigned opening (32) to be produced,
that at least two protrusions (98, 114) that are spaced from one another, both tapering conically, or one protrusion (108) formed by two arranged adjacently sections running into one another and tapering conically, extend(s) from the first surface (82) and meet(s) a common protrusion (96, 112) on a second surface (84) in a closed state of the apparatus.

2. Bristle carrier injection moulding apparatus according to claim 1, **characterized in that** the protrusion(s) (96, 98, 108, 109, 112, 114) defining an opening is/are formed without undercuts when viewed in a perpendicular direction of the assigned surface (82, 84) of the half of the mold, onto which it is/they are fastened.

3. Bristle carrier injection moulding apparatus according to claim 1 or 2, **characterized in that** the apparatus does not comprise a slide.

4. Bristle carrier injection moulding apparatus according to one of the preceding claims, **characterized in that** the front side (106) of the protrusion (96, 112) of the second surface (84) abuts on the front sides (100) of the protrusions (96, 112) of the first surface (82), wherein preferably the flanges (102) of the front sides (100) of the protrusions (96, 112) of the first surface (82), except sections in the clearance thereof, adjoin the flange (104) of the front side (106) of the protrusion (96, 112) of second surface (84) without any lateral offset.

5. Bristle carrier injection moulding apparatus according to claim 4, **characterized in that** a protrusion (109) on the second surface (84) is assigned to a single protrusion (108) on the first surface (82), the protrusions (108, 109) contact one another in a closed state, and the protrusion (108) on the first surface (82) has at least two conical tapering sections (111) that are arranged adjacently to one another for forming funnels (40).

6. Bristle carrier injection moulding apparatus according to one of the preceding claims, **characterized in that** the protrusion on the second surface extends in plan view in an elongated, arc-shaped or cross-shaped way.

7. Bristle carrier injection moulding apparatus according to one of the preceding claims, **characterized in that** all protrusions (96, 98, 108, 109, 112, 114) comprise a respective middle axis (68, 70) extending in the demoulding direction.

8. Bristle carrier injection moulding apparatus according to one of the preceding claims, **characterized in that** for at least one opening the crosssection of the assigned protrusion (96, 98, 108, 109, 112, 114) on the interface to the first surface (82) and the crosssection on the interface to the second surface (84) have different geometries such that the first surface (82) has a circular and the second surface (84) has a rectangular geometry.

## Revendications

1. Dispositif de moulage par injection de support de poils pour le moulage d'un support de poils (16) d'une brosse par injection, le support de poils (16) présentant des orifices (32 ; 46 ; 48 ; 50) dans lesquels des touffes de poils (28) sont bourrées, comportant un premier et un deuxième demi-moule (72, 74) de moulage par injection entre lesquels, à l'état fermé, au moins une cavité qui représente un support de poils (16) et qui doit être remplie de matière plastique liquide est délimitée, le premier demi-moule (72) présentant une première surface (82) qui forme la face arrière (34) du support de poils (16), et le deuxième demi-moule présentant une deuxième surface (84) qui forme la face avant du support de poils (16),
**caractérisé en ce que**
des saillies (96, 98, 108, 109, 112, 114) en ressaut partant de la première et/ou de la deuxième surface (82, 84) sont présentes pour la réalisation des orifices (32), et la section transversale de la saillie (96, 98, 108, 109, 112, 114) d'un orifice associé présente à la transition de la première surface (82) à la saillie adjacente (96, 98, 108, 109, 109, 112, 114) une autre forme géométrique que la section transversale de la saillie (96, 98, 108, 109, 109, 112, 114) associée au même orifice à la transition de la deuxième surface (84) à la saillie associée (96, 98, 108, 109, 112, 114),
**en ce qu'**il est prévu pour la réalisation d'au moins un orifice (32) des saillies (96, 98, 108, 109, 112, 114) qui partent de la première et de la deuxième surface, qui s'étendent les unes vers les autres, qui se touchent à l'état fermé et qui se complètent, parmi les saillies (96, 98, 108, 109, 112, 114) qui se complètent, une saillie sur la deuxième surface (84) étant associée à au moins une saillie sur la première surface (82) laquelle présente un talon qui se rétrécit de manière conique pour la réalisation d'un entonnoir de l'orifice (32) associé à fabriquer,
**en ce qu'**au moins deux saillies (98, 114) espacées l'une de l'autre qui se rétrécissent toutes les deux de manière conique, ou une saillie (108) formée par deux tronçons (111) qui sont agencés l'un à côté de l'autre, qui se confondent l'un dans l'autre et qui se rétrécissent de manière conique, part(ent) de la première surface (82) et rencontre(nt) une saillie commune (96, 112) sur la deuxième surface (84) à l'état fermé du dispositif.

2. Dispositif de moulage par injection de support de poils selon la revendication 1, **caractérisé en ce que** la saillie ou les saillies (96, 98, 108, 109, 112, 114) définissant un orifice, vues perpendiculairement à la surface associée (82, 84) du demi-moule sur lequel elles sont fixées, est/sont réalisée(s) sans contre-dépouille.

3. Dispositif de moulage par injection de support de poils selon la revendication 1 ou 2, **caractérisé en ce que** le dispositif est réalisé sans coulisse.

4. Dispositif de moulage par injection de support de poils selon l'une des revendications précédentes, **caractérisé en ce que** la face frontale (106) de la saillie (96, 112) de la deuxième surface (84) repose sur les faces frontales (100) des saillies (96, 112) de la première surface (82), les bords (102) des faces frontales (100) des saillies (96, 112) de la première surface (82), à l'exception des tronçons dans leur espace intermédiaire, étant de préférence adjacents sans décalage latéral au bord (104) de la face frontale (106) de la saillie (96, 112) de la deuxième surface (84).

5. Dispositif de moulage par injection de support de poils selon la revendication 4, **caractérisé en ce qu'**une saillie (109) sur la deuxième surface (84) est associée à une seule saillie (108) sur la première surface (82), les saillies (108, 109) se contactant à l'état fermé, et la saillie (108) sur la première surface (82) présentant au moins deux tronçons (111) qui se rétrécissent de manière conique et qui sont agencés l'un à côté de l'autre pour la réalisation d'entonnoirs (40).

6. Dispositif de moulage par injection de support de poils selon l'une des revendications précédentes, **caractérisé en ce que** la saillie sur la deuxième surface s'étend, dans une vue de dessus, de manière allongée, en arc ou en croix.

7. Dispositif de moulage par injection de support de poils selon l'une des revendications précédentes, **caractérisé en ce que** toutes les saillies (96, 98, 108, 109, 112, 114) présentent des axes médians (68, 70) qui s'étendent dans le sens de démoulage.

8. Dispositif de moulage par injection de support de poils selon l'une des revendications précédentes, **caractérisé en ce que** pour au moins un orifice, la section transversale de la saillie associée (96, 98, 108, 109, 112, 114) à la transition vers la première surface (82) et la section transversale à la transition vers la deuxième surface (84) ont des géométries qui diffèrent de manière à avoir une géométrie ronde vers la première surface (82) et une géométrie angulaire vers la deuxième surface (84).
